# EUROPEAN PATENT APPLICATION

(11) **EP 1 227 493 A1**
(43) Date of publication of application: **31.07.2002**
(21) Application number: 02250221.5
(22) Date of filing: 14.01.2002
(51) Int. Cl.: G11B 33/04

(54) **Storage of compact discs and like laminar articles**

(30) Priority: 18.01.2001 GB 0101285
(71) Applicant: Duraweld Limited, Scarborough, North Yorkshire YO11 3UZ (GB)
(72) Inventor: Moorhouse, Richard MacAlister, Sr., Duraweld Ltd., Scarborough, North Yorkshire YO11 3UZ (GB); Wood, Tracey, c/o Duraweld Limited, Scarborough, North Yorkshire YO11 3UZ (GB)
(74) Representative: MacMaster, Alan Jeffrey

(57) **Abstract**

A device for accommodating a generally flat three-dimensional article such as a compact disc (12) comprises a support member (5) in the form of a sheet of flexible synthetic plastics material and a retaining member (9) formed by cutting the material of the support member to define a central hub (10) and at least three radiating arms (11), the outer ends of the arms serving to connect the retaining member (9) to the support member (5) in a manner such that the retaining member is displaced from the plane of the support member to facilitate insertion of a laminar article (12) between the support member and the retaining member for retention by the device.

## Description

This invention relates to the accommodation and storage of generally flat three-dimensional articles and is particularly, but not exclusively, applicable to the accommodation of computer discs, CD-ROMs and similar articles.

With the increasing use of computer discs, there is a need for a simple and effective means of storing such discs in a readily accessible and identifiable manner so that they can be readily selected and removed for use when required. There is also an increasing requirement for a simple means of attaching such discs to a support or carrier by means of which they may be supplied with books, files, magazines or other items in a securely mounted, yet readily removable manner.

The present invention provides a device for accommodating a generally flat three-dimensional article such as a computer disc comprising a support member in the form of a sheet of flexible synthetic plastics material and a retaining member formed by cutting the material of the support member to define a central hub and at least three radiating arms, the outer ends of which arms serve to connect the retaining member to the support member in a manner such that the retaining member is displaced from the plane of the support member so as to facilitate insertion of a laminar article between the support member and the retaining member for retention thereby.

Preferably the retaining member is caused to be displaced from the support member by inducing stretching of said radiating arms during formation of the retaining member.

Advantageously stretching of said arms is effected by the formation of a pair of crease lines extending transversely to said arms at the outer ends thereof. The crease lines are advantageously formed on opposite sides of the arms whereby to define a sloping region connecting each radiating arm to the adjacent surface of the support member. The crease lines may advantageously be formed by application of pressure at the region where the crease lines are required. The crease lines may be formed at ambient or elevated temperature.

Preferably said central hub is of generally circular shape and said radiating arms of elongated strip form. Alternatively the central hub may be of square, triangular or other shape and the radiating arms may be of tapered, waisted or other form if desired.

A minimum of three radiating arms are required to retain CDs or other circular laminar articles against lateral disengagement from the retaining member in all directions. However if desired four or more radiating arms may be provided.

The support member may incorporate one or more retaining members as aforesaid. Preferably the support member is of generally rectangular shape and incorporates a plurality of holes adjacent an edge thereof enabling the support member to be mounted in a ring binder or similar cover. The holes may be incorporated in an attachment member hingedly connected to said edge of the support member.

The overall size of the or each retaining member as defined by the length of the radiating arms may be varied dependent on the nature of the article intended to be retained. Thus while relatively large retaining members are required for the accommodation of computer discs, much smaller retaining members may be employed to retain SIM cards, credit cards or other laminar articles of varying size and shape.

The invention also provides a method of forming an integral retaining member from a sheet of flexible plastics material comprising defining a central hub portion and at least three radiating arms by cutting the material from which the support member is formed leaving the retaining member attached to the support member by the outer ends of said radiating arms, and stretching the plastics material at the outer ends of said radiating arms whereby to cause the retaining member to be displaced from the surface of the support member to facilitate insertion of a computer disc or other laminar article between the retaining member and the support member.

Preferably stretching of said plastics material is effected by introducing a pair of crease lines into the plastics material at the outer ends of said radiating arms. Preferably the crease lines are formed one on each side of the support member. The crease lines are preferably formed by application of pressure at ambient or elevated temperature.

The invention also provides a ring binder or similar cover member incorporating a plurality of support members of flexible plastics material as aforesaid incorporating apertures adjacent an edge thereof by means of which the support members are retained within the binder.

An embodiment of the invention will now be described, by way of example only, with reference to the accompanying drawings, in which:-
Fig. 1 is a plan view of a device according to the invention for accommodating a computer disc;
Fig. 2 is an enlarged view of a retaining member incorporated in the device of Fig. 1 and;
Fig. 3 is an end view of the device shown in Fig. 1.

Referring to the drawings, the device comprises a support member in the form of a sheet 5 of flexible synthetic plastics material such as polypropylene. The sheet is of generally rectangular shape and is provided with an attachment portion 6 connected by a hinge line 7 to one longitudinal edge of the sheet 5. The attachment portion 6 incorporates apertures 8 adapted to engage with the rings of a ring binder by which means a number of such sheets may be accommodated together in a hingedly movable and readily accessible manner. A retaining member 9 is formed in a generally central position on the sheet 5 by making a series of cuts in the material of the sheet to define a central hub member 10 and three radiating arms 11, the retaining member thus formed remaining connected to the sheet 5 only at the outer ends of the radiating arms.

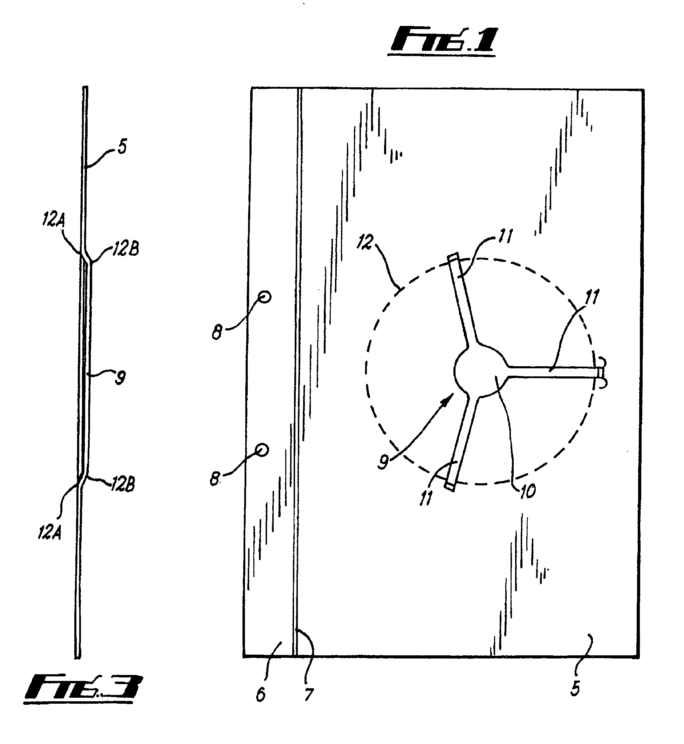

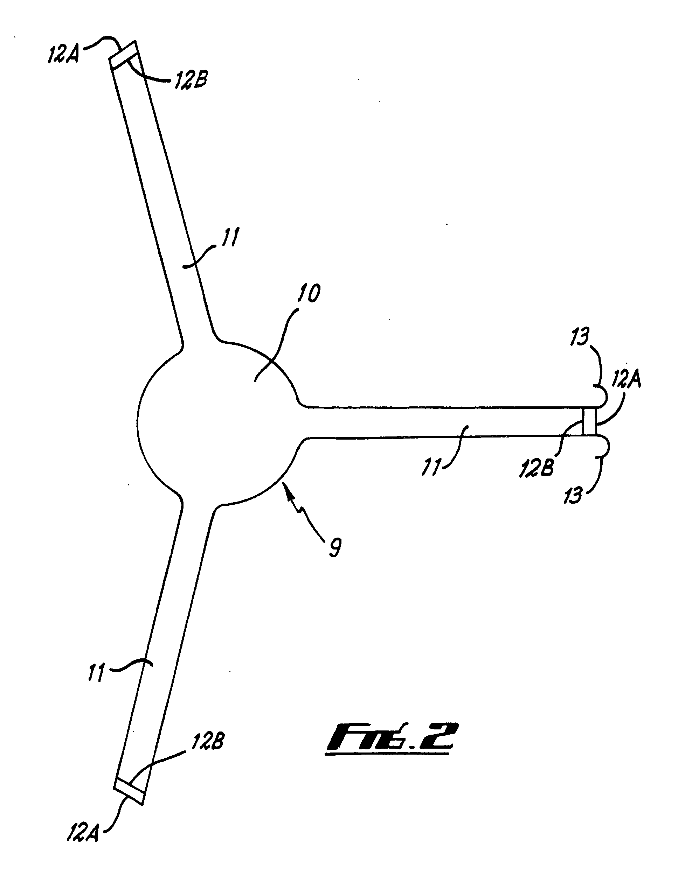

If simply cut from the sheet in this manner the retaining member would remain in the plane of the sheet. However in accordance with the invention, a pair of parallel crease lines 12A and 12B (Fig. 2) are formed at the outer end of each arm 11 by application of pressure in a press. The formation of the crease lines 12A and 12B results in stretching of the plastics material in the region of the crease lines such that the material forming the retaining member 9 moves out of the plane of the sheet 5 into a position in which it is displaced from, but lies parallel to the surface of the sheet 5 as best seen in Fig. 3. The crease lines 12A and 12B are formed one on each side of the sheet closely adjacent to one another. The distance between the crease lines 12A and 12B determines the extent to which the retaining member is displaced from the surface of the sheet 5 and is determined by reference to the thickness of the item to be retained. Thus in the case of a computer disc, CD-ROM or the like, the degree of displacement is relatively small, but sufficient to enable the disc to be inserted beneath the retaining member 9 while being supported on the surface of the sheet 5. The angle of inclination of the arms 11 relative to the hub member 10 is such as to retain the disc against displacement parallel to the surface of the sheet 5 in any angular direction. Fig. 1 shows a disc 12 indicated in broken lines located and retained by the retaining member 9.

As best seen in Fig. 2, the crease lines 12A and 12B formed on two of the three arms 11 are inclined to the longitudinal axes of the associated arms and the crease lines on the third arm are disposed at right angles to the longitudinal axis of the associated arm. This enables a disc 12 to be pushed into position past the arms with the inclined creases since the diameter of the disc is greater than the distance between the ends of these two arms. At the same time the disc is retained against movement in the opposite direction unless sufficient force is applied (for example by hand) to remove it. The crease lines 12A and 12B on the third arm 11 serve merely as a stop for the edge of the disc when it is first inserted and are therefore disposed at right angles to the longitudinal axis of the associated arm. In order to prevent tearing of the plastic material at the end of this arm by engagement of discs with the area in which the creases 12A and 12B are formed, curved slits 13 are formed in the base 5.

By virtue of the arrangement described there is provided a simple and effective means of retaining a computer disc on a supporting sheet until required. Since the retaining member is formed from the material of the sheet itself, the device is of extremely simple construction and can be inexpensively produced. By virtue of the displacement of the retaining member relative to the surface of the sheet produced by stretching of the material at the outer ends of the arms 11, the disc and sheet remain parallel to one another and the tendency of the disc to tear the plastic material at the ends of the arms 11, which would arise in the event the retaining member was simply cut from a flat sheet without subsequent creasing, is eliminated. The device is also of pleasing appearance and the sheet 5 is preferably formed from transparent or translucent material thus enabling printed matter on both sides of the disc to be read or recognised from either side of the sheet.

Various modifications may be made without departing from the invention. For example while in the embodiment three radiating arms are provided, four or more arms may be provided if desired. Alternative means of stretching the plastics material to lift the retaining member from the surface of the sheet may be employed and the central hub portion and arms may be of different shapes and sizes. Where the creases are formed by application of pressure in a press or the like, the creases may be formed at ambient or elevated temperature.

In addition while reference has been made herein primarily to computer discs or CD-ROMS, the invention may also be applied to retention of other generally flat laminar articles such as SIM cards, credit cards or the like. Moreover while in the embodiment a single retaining member is formed on the support sheet, multiple retaining members may be formed on the same sheet or a single member may be provided at a different position, for example towards a corner of the support sheet.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A device for accommodating a generally flat three-dimensional article comprising a support member (5) in the form of a sheet of flexible synthetic plastics material and a retaining member (9) formed by cutting the material of the support member **characterised in that** the retaining member (9) comprises a central hub (10) and at least three radiating arms (11), the outer ends of the arms (11) serving to connect the retaining member (9) to the support member (5) in a manner such that the retaining member is displaced from the plane of the support member so as to facilitate insertion of a laminar article (12) between the support member and the retaining member for retention thereby.

2. A device according to claim 1 **characterised in that** said retaining member (9) is caused to be displaced from the support member (5) by inducing stretching of said radiating arms (11) during formation of the retaining member.

3. A device according to claim 2 **characterised in that** stretching of said arms (11) is effected by the formation of a pair of crease lines (12A, 12B) extending transversely to said arms at the outer ends thereof.

4. A device according to claim 3 **characterised in that** said crease lines (12A, 12B) are formed on opposite sides of the arms whereby to define a sloping region connecting each radiating arm (11) to the adjacent surface of the support member (5).

5. A device according to any preceding claim **characterised in that** said crease lines (12A, 12B) are formed by application of pressure at the region where the crease lines are required.

6. A device according to any of claims 3 to 5 **characterised in that** said crease lines (12A, 12B) are formed at ambient temperature.

7. A device according to any preceding claim **characterised in that** said central hub (10) is of generally circular shape and said radiating arms (11) of elongated strip form.

8. A device according to any preceding claim **characterised in that** more than three radiating arms (11) are provided.

9. A device according to any preceding claim **characterised in that** said support member (5) incorporates a plurality of retaining members (9).

10. A device according to any preceding claim **characterised in that** said support member (5) is of generally rectangular shape and incorporates a plurality of holes (8) adjacent an edge thereof enabling the support member to be mounted in a ring binder or similar cover.

11. A device according to claim 10 **characterised in that** said holes (8) are incorporated in an attachment member (6) hingedly connected (at 7) to said edge of the support member (5).

12. A device according to any preceding claim **characterised in that** the or each retaining member (9) is dimensioned to accommodate a computer disc (12).

13. A device according to any of claims 1 to 11 **characterised in that** the or each retaining member (9) is dimensioned to accommodate a credit or like card.

14. A device according to any of claims 1 to 11 **characterised in that** the or each retaining member (9) is dimensioned to accommodate a SIM card.

15. A ring binder or similar cover member **characterised in that** it includes a plurality of devices according to any preceding claim releasably retained within the binder.

16. A method of forming an integral retaining member (9) from a sheet (5) of flexible plastics material **characterised by** defining a central hub portion (10) and at least three radiating arms (11) by cutting the material from which the sheet (5) is formed leaving the retaining member (9) attached to the sheet by the outer ends of said radiating arms (11), and stretching the plastics material at the outer ends of said radiating arms whereby to cause the retaining member (9) to be displaced from the surface of the sheet (5) to facilitate insertion of a computer disc (12) or other laminar article between the retaining member (9) and the remainder of the sheet (5).

17. A method according to claim 16 **characterised in that** stretching of said plastics material is effected by introducing a pair of crease lines (12A, 12B) into the plastics material at the outer ends of said radiating arms (11).

18. A method according to claim 17 **characterised in that** said crease lines (12A, 12B) are formed one on each side of the sheet (5).

19. A method according to claim 17 or 18 **characterised in that** said crease lines (12A, 12B) are formed by application of pressure.

20. A method according to claim 19 **characterised in that** said crease lines (12A, 12B) are formed at ambient temperature.

21. A device for accommodating a generally flat three-dimensional article **characterised in that** it is produced by the method according to any of claims 16 to 20.
